# EUROPEAN PATENT SPECIFICATION

(11) **EP 3 303 860 B1**
(45) Date of publication and mention of the grant of the patent: **24.03.2021**
(21) Application number: 16731649.6
(22) Date of filing: 31.05.2016
(51) Int. Cl.: F16C 1/10, E05B 77/00

(54) **BOWDEN CABLE USED AS ACTUATOR FOR A FUNCTIONAL UNIT IN A MOTOR VEHICLE**
ALS AKTUATOR FÜR EINE FUNKTIONALE EINHEIT EINES KRAFTFAHRZEUGS VERWENDETER MOTOR
CÂBLE BOWDEN UTILISÉ EN TANT QU'ACTIONNEUR POUR UNE UNITÉ FONCTIONNELLE DANS UN VÉHICULE À MOTEUR

(30) Priority: 01.06.2015 CN 201510292692
(43) Date of publication of application: 11.04.2018
(73) Proprietor: Kiekert AG, 42579 Heiligenhaus (DE)
(72) Inventor: LIU, Yukin, Wodehuayuan 33-502 (CN); ZHANG, Henry, Jiangsu Province 215500 (CN)
(86) International application number: PCT/IB2016/000741
(87) International publication number: WO 2016/193804

(56) References cited:
- DE-A1-102010 063 868
- DE-U1-202014 102 033
- US-A- 2 954 248

## Description

The invention relates to a Bowden cable consisting of a shell and a core as well as a seal for the core, preferably designed as actuator for a functional unit in a motor vehicle as well as to a latch unit equipped with such Bowden cable for a door or tailgate as functional element in a motor vehicle.

A Bowden cable according to the invention normally is an object consisting of a wire or cable core which can be moved in relation to a normally flexibly designed shell. The shell of such a Bowden cable is often made of plastic. The core is made of metal or metal wire respectively. Bowden cables of the above mentioned kind are preferably used as actuators or control elements for numerous functional elements in motor vehicles. Contrary to the also often used rigid rod elements Bowden cables can be used more flexibly. With small radii, for example, they can even be placed around edges and thus allow for adapting to the respective given conditions inside a vehicle.

A seal for the core of a Bowden cable according to the invention means a device or element which seals the sliding part of the core against the surroundings, especially against environmental influences like for example humidity.

Such Bowden cables used as actuating or controlling elements are either manually operated or motor actuated, manually operated for example via a handle, i.e. a pull handle for opening a vehicle door lock, motor actuated for example via a drive motor operating a cinching aid for a vehicle door lock.

Functional elements in a motor vehicle according to the invention are devices for operating and using motor vehicles, as for example clutches, heating and air condition systems, tank flaps, or door latches. But functional elements are also respective installations or equipment, for example the above mentioned cinching aid for a motor vehicle door latch.

According to DE 297 05 650 U1 a Bowden cable is used as actuator for the operation of air flaps in heating and air condition systems in motor vehicles. According to DE 11 2006 000 105 B4 a Bowden cable is used for opening locked seat backrests. When opened, such backrests can be folded down to enlarge the load space or can be tilted in order to facilitate getting into the car.

The above mentioned areas of application for Bowden cables used as actuators in motor vehicles are all located inside the driver's cabin and therefore are not directly exposed to environmental influences and consequently are normally not exposed to extreme humidity.

Due to their flexibility already described above, especially due to the possibility of flexibly placing them around functional elements Bowden cables are preferably used as actuators for locks and latching in locking systems and for motor vehicles latches, like for example latches for vehicle doors or tailgates such as side door locks, boots, or bonnets.

Thus, from DE 20 2009 010 787 A1 an electrically driven cinching aid for a motor vehicle door latch is known using a Bowden cable as actuator between drive and latch.

Motor vehicle doors or tailgates equipped with latches are normally divided into a wet area and a dry area. In other words: Such a latch typically mounted to the side of the vehicle door facing the central column (B-column) is at least partly exposed to the outer atmosphere and the respective environmental influences. It is subject to all atmospheric changes, like for example changes in temperature including changes in the physical state of the condensate from water to ice.

From DE 199 44 968 A1 we know a locking system for a vehicle door consisting of a wet and a dry area.

Insofar, parts of such locking systems may also be subject to environmental influences and parts moving in relation to one another, like Bowden cables, have to be especially considered in connection with such influences. Particularly, if humidity condenses on such Bowden cables, especially on the interface between shell and core, humidity might possibly creep into the sliding range of the core. If then the physical state of the humidity changes due to a drop in temperature, the functionality of the Bowden cable and therewith of the locking system will be at risk. Consequently, the positioning of the Bowden cable and the seal of the sliding range of the core are especially important.

From DE 101 42 832 A1 a Bowden cable is known with a highly effective seal for the sliding range of the core, especially effective against humidity. For building the seal a spring-loaded guide tube slid over the core will be pressed against the shell which is covered by a damping layer.

DE 102 20 732 A1 discloses a moisture-proof connection between the Bowden cable and the vehicle door latch, with an O-formed sealing ring on the shell preventing humidity from entering into the lock housing, thus equally protecting the exit area of the Bowden cable core placed inside the shell.

In WO 2007/042 086 A1 the Bowden cable interface in a motor vehicle is sealed via a bag bellow.

From JP 2006-33 66 95 A a Bowden cable is known, with an end cap on the shell being equipped with a surrounding notch for fixing/clipping the Bowden cable to the locking element.

From US 2 954 248 A a Bowden cable consisting of a shell and a core, as well as a seal, the seal being built by a sleeve slid on the shell and a spring actuating the sleeve. This document shows a Bowden cable with the features described in the preamble of appended claim 1.

From DE 20 2014 102 033 U1 a Bowden cable consisting of a shell and a core is known, where the shell is terminated at the level of a support element with the Bowden cable going through an opening of the support element.

From DE 101 42 832 U1 a a Bowden cable consisting of a shell and a core, as well as a seal, the seal being built by a sleeve slid on the shell and a spring actuating the sleeve, the spring being a concentric spiral spring having an extension, is known.

All described Bowden cables have proved effective with regard to sealing against environmental influences.

It is the objective of the here considered invention to provide a simple Bowden cable composed of few parts only, which will, even in extreme environmental conditions, effectively seal the core. Additionally, effective sealing shall also be guaranteed under mechanical loads as impacts and vibrations when the vehicle is moving.

Such mechanical loads in vehicles may result from road bumps, but also from different pressures between the outer atmosphere on one hand the driver's cabin on the other hand. Also, a sudden move of the actuator can momentarily cause increased mechanical load.

It is understood that the mentioned environmental influences and the mechanical loads normally occur simultaneously and have to be managed by the seal.

The solution of this objective comprises a Bowden cable with the characteristics of claim 1. Advantageous embodiments result from the dependent claims 2 - 6. Furthermore, the invention relates to a lock unit as functional element for a motor vehicle door or tailgate equipped with such a Bowden cable.

The Bowden cable according to the invention preferably used as actuator for a functional unit in a motor vehicle consists of a shell and a core as well as of a seal for the core, with the seal being built by a sleeve which is slid over the core and by a spring which actuates the sleeve, the spring being designed as concentric spiral spring having a conical extension which at least in part embraces the sleeve, the sleeve is built as a hollow body with a recess facing the spiral spring, wherein one coil of the spring lies in the recess of the sleeve, forming a jointed connection between the spring and the sleeve and in that the Bowden cable is equipped with at least one fixing element which is the counter bearing for the spring loaded sleeve and the end stop for the spiral spring.

The elasticity of the Bowden cable seal is optimized in a way that on one hand an inlet matching the coils of the spiral spring is built by the recess in the sleeve. This provides a guided, jointed connection between spiral spring and the sleeve that further improves the elasticity of the seal.

The Bowden cable is equipped with at least one fixing element which is the counter bearing to the spring loaded sleeve and as an end stop for the spiral spring.

This design of a Bowden cable with a spring-loaded movable sleeve which can be slid on the core provides an elastic seal of the sliding range of the core. Due to its flexibility the sealing efficiency of the seal is not affected even under high mechanical loads. Such loads often occur when the vehicle is driving, but also when the actuator is operated.

The shell of the Bowden cable is preferably made of plastic. For the Bowden cable core inside preferably metal wire or a mesh of metal wire is used. In the context of the invention plastic ropes can be used, too.

In connection with the invention concentric spiral spring means that the spring coils are coiling around a common middle axis.

This Bowden cable with a spring constant as it can only be generated by spiral springs provides a special "soft" elasticity of the seal that even reacts to micro impacts and vibrations.

The concentric spiral spring has a conical extension which at least in part embraces the sleeve. Concentric conical in the context of the invention means that the spiral spring is equipped with coils coiling around a common middle axis with the coil diameters constantly increasing. In the context of the invention, in part embracing the sleeve means that the spiral spring coils around at least one third of the length of the sleeve. It is preferably intended, that the spiral spring covers the complete length of the sleeve in tight fit form.

This very important embodiment of the Bowden cable in combination with the sleeve guarantees a highly flexible smoothness of the seal in a way that the sleeve can limitedly roll inside the spring.

This embodiment secures that the Bowden cable, if installed in minor radii, unrestrictedly keeps its sealing efficiency. From the above mentioned DE 102 20 732 A1 the use of a Bowden cable for a curve bigger than 90° is known.

In the above mentioned embodiment the spiral spring acts as pressure element and as guiding element for the sleeve.

In an especially preferred embodiment of the Bowden cable it is intended that the conical extension runs at an angle of 7° to 13° in relation to the middle axis.

This special geometry of the spiral spring provides an optimum interaction of spring and sleeve (rolling of the sleeve within the spring).

In a further preferred embodiment of the Bowden cable the conical extension runs at an angle of 10° in relation to the middle axis.

This very special geometry of the spiral spring and the spring constant achieved therewith improve the interaction between spring and sleeve and thus leads to further optimization of the seal.

In a further preferred embodiment of the Bowden cable a spiral spring made of metal is used. The preferred material for the spring is steel.

With the spiral spring made of metal, especially of steel, the spring constant, which is extremely important for the Bowden cable, can be specially constructed.

In a further embodiment of the Bowden cable it is intended that the shell is made of elastomeric plastic.

In this embodiment of the invention the interaction between the metal spring and a plastic sleeve allows for an especially low-friction and long-term wear-resistant connection between sleeve and spiral spring.

According to the invention the sleeve which can be slid onto the core is designed as hollow body (hollow cylinder).

Further optimization of the elasticity of the seal is reached when the spiral is completely coiled around the sleeve and the surface of the solid sleeve cylinder is designed slightly crowned. This further optimizes the above described rolling of the sleeve inside the spring under load condition. In other words: The seal can better resist negative mechanical impacts.

With this preferred embodiment of the invention it is achieved that the sleeve is definitely limited by a counter bearing covering the shell and the spiral spring is definitely limited by an end stop. Compared to the above mentioned use of a rim or bulge this counter bearing and the fixed stop further optimize the Bowden cable, especially the seal. The stop for the spiral spring on the fixing element is preferably designed as surrounding O-shaped notch so that the geometrically complementary end of the sleeve can limitedly roll inside, this further increasing the elasticity of the seal. The fixing element is preferably designed as O-shaped hollow element through which the Bowden cable can be slid and to which it is fastened. The hollow fixing element then also has an O-shaped notch for clipping the Bowden cable to a functional element of the motor vehicle, preferably to a vehicle door latch.

The invention also comprises a latch unit for a vehicle door or tailgate, used as functional element in a motor vehicle, with a locking system consisting of catch and at least one pawl for locking the catch in place, at least one activator for opening the locking system and possibly at least one locking device for locking the locking system, where the latch unit comprises a Bowden cable according to the invention as actuator for the opening of the latch unit.

For a motor vehicle latch as for example known from DE 10 2010 063 868 A1 operational safety is reached using the Bowden cable according to the invention as actuator. For: the Bowden cable preferably used as actuator for opening a locking system of such a latch and consequently for opening a related door or tailgate has an extremely high tightness even in driving mode. This is independent of whether the actuator moved by a door handle for opening the locking system is connected to the latch (latch housing) in the wet or in the dry area of the respective door or tailgate.

As far as not otherwise indicated in the following the object of the invention can comprise the above mentioned characteristics individually or in arbitrary combination, within the scope of the claims.

An advantageous embodiment of the Bowden cable according to the invention as well as a motor vehicle latch equipped therewith will be described in the following figures.
- Figure 1:: Bowden cable with main components
- Figure 1a:: sleeve according to the invention, enlarged
- Figure 1b:: spring according to the invention, enlarged
- Figure 1c:: fixing element according to the invention, enlarged
- Figure 2:: vehicle with side door latch, in sections
- Figure 3:: motor vehicle latch equipped with Bowden cable

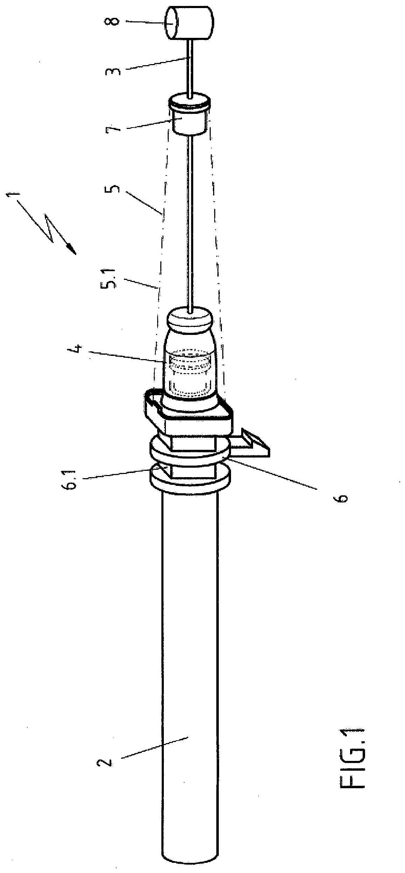

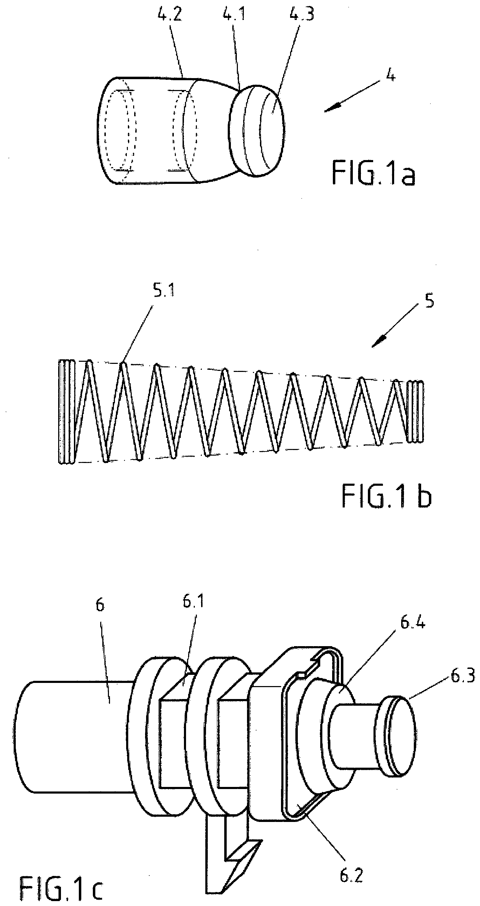

Figure 1 illustrates the design of a Bowden cable (1) according to the invention with all essential parts. The Bowden cable (1) comprises a shell (2) preferably made of plastic and a sliding core (3) preferably made of steel inside the shell (2). At the end of the core (3) there is an end stop (7) as well as a connecting element (8). The connecting element (8) serves as connector between the Bowden cable (1) and a functional element, for example a here invisible operating lever for a motor vehicle door latch unit (10). The connecting element (8) is shown as bolt (8) vertical to the Bowden cable (1). The bolt (8) normally is soldered to the core (3) of the Bowden cable. In the context of the invention the connecting element (8) can also be designed differently, for example as loop or hook. For sealing the here invisible end of the shell (2) the illustrated sleeve (4) which is slid on the core (3) and spring loaded by the concentric conical spiral spring (5), encloses the shell (2). For this purpose, normally, the shell (2) has a here invisible bulgelike counter bearing (6.4) inside the fixing element (6). Sealing the Bowden cable (1) means that the sliding range of the core (3) inside the shell (2) is sealed against environmental influences.

The sleeve (4) is an opened hollow body made of elastomeric plastic. As detailed in figure la, the sleeve (4) has an opening (4.3) for inserting the core (3). Additionally the sleeve (4) has a crowned surface (4.2) and a recess (4.1) on the front. In the embodiment shown the conically designed spiral spring (5) covers the complete length of the sleeve (4). One coil of the spiral spring (5) lies in the recess (4.1) on the sleeve (4) thus forming the described jointed connection between spiral spring (5) and sleeve (4). Sleeve (4) and spiral spring (5) together form the elastic seal of the Bowden cable (1) according to the invention. If mechanical loads occur like impacts or vibrations caused by driving when the Bowden cable (1) is used, for example when mounted into a motor vehicle, these loads will be offset and compensated by the elastic seal of the invention consisting of sleeve (4) and spiral spring (5). The seal is not affected by i.e. permanent loads. Even if the Bowden cable (1) is actuated suddenly it will be protected by the elastically designed seal.

From figure 1 the above rolling of the sleeve (4) inside the spiral spring (5) can be well understood.

In figure 1 the Bowden cable (1) together with the shell (2) is fixed inside a fixing element (6). This fixing element (6) is preferably clipped to the functional element, i.e. a motor vehicle latch unit (10) via a surrounding notch (6.1) with a respective recess. As shown below in figure 1c the connecting element (6) is preferably designed as counter bearing (6.4) to the sleeve (4) and as end stop (6.2) for the spiral spring (5).

Figure 1a shows the sleeve (4) enlarged. The sleeve (4) is made of elastomeric plastic and is built as hollow round body with a length of approx. 24 mm. Through an opening (4.3) the sleeve (4) is concentrically slid on the core (2) of the Bowden cable (1). In the shown embodiment according to figure 1 the sleeve (4) is fully inserted into the spiral spring (5) which has been slid over the core (3) before. One coil of the spiral spring (5) lies in the recess (4.1) of the sleeve (4). This supports the above described joint connection between spiral spring (5) and sleeve (4) so that under load condition the sleeve (4) can roll inside the spiral spring (5) as described above. The crowned surface (4.2) of the sleeve 4) is equally helpful for the rolling of the sleeve (4). In this embodiment the part of the sleeve (4) facing the shell (2) has a diameter of 5 to 5,8 mm. For the required tight fit with the spiral spring (5) a diameter of 5,4 mm is preferred for the sleeve(4). The wall thickness of the hollow body of the sleeve (4) is preferably 0,5 mm.

Figure 1b shows a concentric spiral spring (5) with increasing radii enlarged as conical spiral spring (5). The spiral (5) is preferably made of steel, with gaps of about 4 mm between the coils. The conical extension (5.1) of the spiral spring (5) preferably runs at an angle of 7° to 13° related to the middle axis. An angle of 10° has proved especially preferred. The initial diameter of the spiral spring (5) is preferably 6,8 to 7 mm, regularly 6,9 mm. To build the above mentioned tight fit with the sleeve (4) the spring coils are guided in a way that the largest diameter of the spiral spring (5) is 5,2 to 5,6 mm, preferably 5,4 mm. The total length of the spiral spring (5) preferably is 45 mm.

Figure 1c shows enlarged the fixing element (6) for the Bowden cable designed as clip (6). The fixing element (6) is preferably made of metal and designed with a surrounding notch (6.1) for clipping the cable to a corresponding recess (17) in a functional element, i.e. a motor vehicle latch unit (10). The fixing element (6) is designed as counter bearing (6.4) for the sleeve (4) and also as end stop (6.2) for the spiral spring (5). Therefore, the fixing element (6) is designed around the duct (6.3) for the core with a bulge (6.4) as end stop (6.4) for the sleeve (4).

The mentioned counter bearing (6.2) for the spiral spring (5) is built with a surrounding, preferably half-round groove (6.2). In this groove (6.2) the end coil of the spiral spring (5) can limitedly roll under load conditions.

The high elasticity (flexibility) of the seal of the Bowden cable (1) becomes especially obvious in figures 1a - 1c which show enlarged views of the parts a.) sleeve (4) with the recess (4.1) and the crowned surface (4.2), b.) the concentrically designed spiral spring (5) and c) the fixing elements (6) with the groove (6.2).

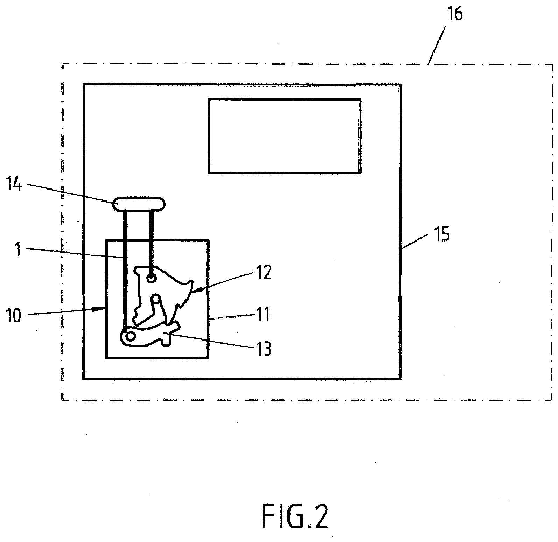

Figure 2 shows a motor vehicle latch unit (10) in a motor vehicle door (15) in a motor vehicle (16) shown in part only. The latch unit (10) has a latch housing (11) illustrated in open view, consisting of a locking system (12, 13) composed of catch (12) and pawl (13) for locking in place the catch (12). The locking system (12, 13) is shown in engaged (locked) position, therefore the vehicle door (15) is locked, too. According to the invention the pawl (13) is connected to the here only schematically shown Bowden cable (1) via a pull handle (14) at the door (15). For opening the latch unit (10) and therewith for opening the door (15) the pull handle (14) is operated. Thus, via the Bowden cable (1) which is the actuator (1) for the motor vehicle latch (10) as functional element (10) the pawl (13) is lifted off the spring loaded catch (12). Together with the pull handle (14) the Bowden cable (1) is part of the operating system of the latch unit (10). It is understood, that such a Bowden cable (1) can equally be used in a here not illustrated locking system for the latch unit. For completeness it should be mentioned that between the Bowden cable (1) and the pawl (13) a here invisible release lever for opening may be installed. It is equally understood, that the motor vehicle door (15) is equipped with a here invisible door handle on the inside of the vehicle (16).

The highly sealed Bowden cable (1) according to the invention unrestrictedly works even in extreme environmental conditions. The Bowden cable (1) can therefore be installed in wet areas of a vehicle door (15) without problems.

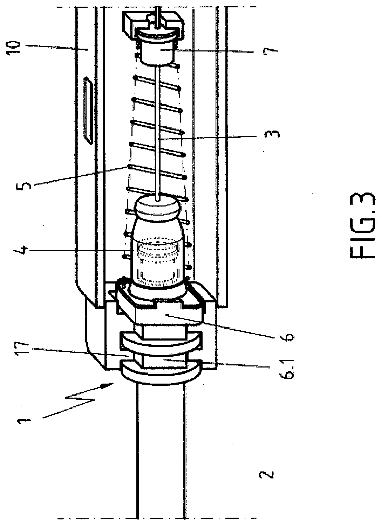

Figure 3 shows a Bowden cable (1) according to the invention which is clipped to a fixing element (6) with a corresponding recess (17) in a motor vehicle door latch (10). The Bowden cable (1) is connected ready for operation to the motor vehicle latch (10).

As a result, the invention relates to a highly efficient seal even in extreme environmental conditions for a Bowden cable (1) and therefore for a motor vehicle latch unit (10), which can be built using simple means.

### List of reference numbers

- 1:: Bowden cable
- 2:: shell
- 3:: core
- 4:: sleeve
- 4.1:: recess
- 4.2:: surface
- 4.3:: opening
- 5:: spiral spring
- 5.1:: conical extension
- 6:: fixing element
- 6.1:: notch
- 6.2:: groove
- 6.3:: duct
- 6.4:: end stop
- 7:: end stop
- 8:: connecting element
- 10:: latch unit
- 11:: latch housing
- 12:: catch
- 13:: pawl
- 14:: door handle
- 15:: motor vehicle door
- 16:: motor vehicle
- 17:: recess

## Claims

1. Bowden cable (1) consisting of a shell (2) and a core (3) as well as a seal (4,5) for the core (3), preferably as actuator for a functional unit (10) in a motor vehicle (16) wherein the seal (4,5) is built by a sleeve (4) slid over the core (3), and a spring (5) actuating the sleeve (4), the spring (5) being designed as concentric spiral spring (5) having a conical extension (5.1) which at least in part embraces the sleeve (4), **characterized in that** the sleeve (4) is designed as a hollow body with a recess (4.1) facing the spiral spring (5), wherein one coil of the spring (5) lies in the recess (4.1) of the sleeve (4), forming a jointed connection between the spring (5) and the sleeve (4) and **in that** the Bowden cable (1) is equipped with at least one fixing element (6) which is the counter bearing (6.4) for the spring loaded sleeve (4) and the end stop (6.2) for the spiral spring (5).

2. Bowden cable (1) according to claim 3, **characterized in that** the conical extension (5.1) of the spiral spring (5) runs at an angle of 7° to 13° in relation to the middle axis.

3. Bowden cable (1) according to claim 4, **characterized in that** the conical extension (5.1) of the spiral spring (5) runs at an angle of 10° in relation to the middle axis.

4. Bowden cable (1) according to one of the preceding claims, **characterized in that** the spiral spring (5) is made of metal.

5. Bowden cable (1) according to one of the preceding claims, **characterized in that** the sleeve (4) consists of elastomeric plastic.

6. Latch unit (10) for a vehicle door (16) or tailgate (16), used as functional element in a motor vehicle (15), with a locking system (12, 13) consisting of catch (12) and at least one pawl (13) for locking the catch (12) in place, at least one activator (14) for opening the locking system (12,13) and possibly at least one locking device for locking the locking system (12, 13), **characterized in that** the latch unit comprises a Bowden cable (1) according to one of the preceding claims as actuator for the opening of the latch unit (10).

## Patentansprüche

1. Bowdenzug (1), der aus einer Hülle (2) und einem Kern (3) sowie einer Dichtung (4,5) für den Kern (3) besteht, vorzugsweise als Aktuator für eine Funktionseinheit (10) in einem Kraftfahrzeug (16), wobei die Dichtung (4,5) durch eine Hülse (4), die über den Kern (3) geschoben ist, und eine Feder (5), die die Hülse (4) betätigt, errichtet ist, wobei die Feder (5) als konzentrische Spiralfeder (5) aufgebaut ist, die eine konische Verlängerung (5.1) aufweist, die wenigstens teilweise die Hülse (4) umklammert,
**dadurch gekennzeichnet, dass** die Hülse (4) als ein Hohlkörper mit einer Aussparung (4.1) aufgebaut ist, die der Spiralfeder (5) zugewandt ist, wobei eine Spule der Feder (5) in der Aussparung (4.1) der Hülse (4) liegt und eine zusammengefügte Verbindung zwischen der Feder (5) und der Hülse (4) ausbildet und dadurch, dass der Bowdenzug (1) mit wenigstens einem Befestigungselement (6) ausgestattet ist, das das Gegenlager (6.4) für die federbelastete Hülse (4) und der Endanschlag (6.2) für die Spiralfeder (5) ist.

2. Bowdenzug (1) nach Anspruch 3, **dadurch gekennzeichnet, dass** die konische Verlängerung (5.1) der Spiralfeder (5) in einem Winkel von 7° bis 13° in Bezug auf die Mittelachse verläuft.

3. Bowdenzug (1) nach Anspruch 4, **dadurch gekennzeichnet, dass** die konische Verlängerung (5.1) der Spiralfeder (5) in einem Winkel von 10° in Bezug auf die Mittelachse verläuft.

4. Bowdenzug (1) nach einem der vorhergehenden Ansprüche, **dadurch gekennzeichnet, dass** die Spiralfeder (5) aus Metall hergestellt ist.

5. Bowdenzug (1) nach einem der vorhergehenden Ansprüche, **dadurch gekennzeichnet, dass** die Hülse (4) aus elastomerischem Kunststoff besteht.

6. Verriegelungseinheit (10) für eine Fahrzeugtür (16) oder Heckklappe (16), die als Funktionselement in einem Kraftfahrzeug (15) verwendet wird, mit einer Schließanlage (12, 13), die aus einer Drehfalle (12) und wenigstens einer Sperrklinke (13) zum Schließen der Drehfalle (12) an Ort und Stelle, wenigstens einen Aktivator (14) zum öffnen der Schließanlage (12, 13) und möglicherweise wenigstens einer Schließvorrichtung zum Schließen der Schließanlage (12, 13), besteht,
**dadurch gekennzeichnet, dass**, die Verriegelungseinheit einen Bowdenzug (1) nach einem der vorhergehenden Ansprüche als Aktuator für das Öffnen der Verriegelungseinheit (10) umfasst.

## Revendications

1. Câble Bowden (1) composé d'une enveloppe (2) et d'une âme (3) ainsi que d'un joint (4, 5) pour l'âme, (3), de préférence en tant qu'actionneur pour une unité fonctionnelle (10) dans un véhicule automobile (16) dans lequel le joint (4, 5) est constitué d'un manchon (4) passé sur l'âme (3), et d'un ressort (5) actionnant le manchon (4), le ressort (5) étant conçu en tant que ressort hélicoïdal concentrique (5) ayant un prolongement conique (5.1) englobant au moins en partie le manchon (4), **caractérisé en ce que** le manchon (4) est conçu en tant que corps creux avec un évidement (4.1) faisant face au ressort hélicoïdal (5), dans lequel une spire du ressort (5) se situe dans l'évidement (4.1) du manchon (4), formant une liaison articulée entre le ressort (5) et le manchon (4) et **en ce que** le câble Bowden (1) est équipé d'au moins un élément de fixation (6) étant le contre-palier (6.4) pour le manchon équipé du ressort (4) et la butée (6.2) pour le ressort hélicoïdal (5).

2. Câble Bowden (1) selon la revendication 3, **caractérisé en ce que** le prolongement conique (5.1) du ressort hélicoïdal (5) forme un angle de 7° à 13° par rapport à l'axe médian.

3. Câble Bowden (1) selon la revendication 4, **caractérisé en ce que** le prolongement conique (5.1) du ressort hélicoïdal (5) forme un angle de 10° par rapport à l'axe médian.

4. Câble Bowden (1) selon l'une des revendications précédentes, **caractérisé en ce que** le ressort hélicoïdal (5) est en métal.

5. Câble Bowden (1) selon l'une des revendications précédentes, **caractérisé en ce que** le manchon (4) est composé de plastique élastomère.

6. Unité de verrou (10) pour une porte de véhicule (16) ou un hayon (16), utilisée en tant qu'élément fonctionnel dans un véhicule automobile (15), avec un système de verrouillage (12, 13) composé d'un loquet (12) et d'au moins un arrêtoir (13) pour verrouiller le loquet (12) en place, d'au moins un activateur (14) pour ouvrir le système de verrouillage (12, 13) et éventuellement d'au moins un dispositif de verrouillage pour verrouiller le système de verrouillage (12, 13), caractérisé en en ce que l'unité de verrouillage comprend un câble Bowden (1) selon l'une des revendications précédentes en tant qu'actionneur pour l'ouverture de l'unité de verrouillage (10).
